(19) Europäisches Patentamt

European Patent Office

Office européen des brevets

(11) **EP 0 438 897 B1**

(12) **EUROPEAN PATENT SPECIFICATION**

(45) Date of publication and mention
of the grant of the patent:
**10.04.1996 Bulletin 1996/15**

(51) Int. Cl.$^6$: **C04B 35/58**

(21) Application number: **90313843.6**

(22) Date of filing: **18.12.1990**

(54) **Silicon nitride bodies**

Siliciumnitridkörper

Corps en nitrure de silicium

(84) Designated Contracting States:
**DE FR GB IT SE**

(30) Priority: **23.01.1990 JP 11780/90**

(43) Date of publication of application:
**31.07.1991 Bulletin 1991/31**

(73) Proprietor: **NGK INSULATORS, LTD.**
**Nagoya City Aichi Pref. (JP)**

(72) Inventors:
• **Sakai, Hiroaki**
**Mizuho-Ku, Nagoya City, Aichi Pref. (JP)**
• **Isomura, Manabu**
**Tenpaku-Ku, Nagoya City, Aichi Pref. (JP)**

(74) Representative: **Paget, Hugh Charles Edward et al**
**MEWBURN ELLIS**
**York House**
**23 Kingsway**
**London WC2B 6HP (GB)**

(56) References cited:
• **CHEMICAL ABSTRACTS, vol. 108, no. 18, 2nd May 1988, abstract no. 155377a, Columbus, Ohio, US; & JP-A-63 021 254**
• **WORLD PATENT INDEX DATABASE, week 47, 1977, accession no. 77-83857Y [47], Derwent Publications Ltd, London, GB; & JP-A-52 122 299**
• **Derwent World Patent Index AN 88-067519(10); & JP-A-63 021 254**
• **Chemical Abstracts AN CA 88 (12): 780286 ; & JP-A-52 122 299**

Remarks:
The file contains technical information submitted after the application was filed and not included in this specification

**Description**

The present invention relates to silicon nitride sintered bodies suitable for use as high temperature structural materials.

Various ceramic materials have been tried as high temperature structural materials. High strength and high fracture toughness as well as good thermal shock resistance are cited as characteristics required for the high temperature structural ceramics. High heat conductivity, low coefficient of thermal expansion, low Young's modulus, etc. are required to improve the thermal shock resistance. BeO, $A\ell N$, SiC, etc. are known as ceramic materials having high thermal conductivity.

However, among the above-mentioned ceramic materials having high thermal conductivity, BeO and $A\ell N$ have low strength, and SiC has high strength, but its fracture toughness is low.

On the other hand, although $Si_3N_4$ is known as a material having high strength and high toughness, but it generally has low thermal conductivity. Accordingly, known silicon nitride sintered bodies have a problem in thermal shock resistance.

JP-A-63-021254 discloses a $Si_3N_4$ body made by molding and sintering $Si_3N_4$ powder of large particle diameter and containing a sintering accelerator, to improve high temperature mechanical strength of the product.

JP-A-52-122299 discloses a $Si_3N_4$ body, containing at least 90% $\beta$-phase, made by molding and sintering a $Si_3N_4$ powder containing two or more of BeO, MgO and SrO as sintering additives and at least one rare earth metal oxide. The $Si_3N_4$ powder used is at least 30 wt% $\alpha$-phase, of not less than 99% purity and has a grain size of not more than 10$\mu$m. The aim is to improve density, mechanical strength and resistance to thermal shock.

The present invention aims to provide silicon nitride bodies favorably usable as high temperature structural materials by improving the defect in the thermal shock resistance of $Si_3N_4$ through increasing the thermal conductivity thereof.

The sintered silicon nitride body according to the present invention is set out in claim 1.

One process for producing the silicon nitride bodies according to the present invention comprises the steps of grinding and mixing a raw material of silicon nitride containing not more than 0.3 wt% of $A\ell$ when calculated as $A\ell_2O_3$, shaping the mixture, and firing the shaped body.

The present inventors have discovered that in the above-mentioned silicon nitride bodies, when the number of the grain boundaries of $Si_3N_4$ per the length of 10 $\mu$m is not more than 20 when measured along a straight line drawn in an arbitrary section thereof, heat dissipation at the grain boundaries becomes smaller, so that highly thermal conductive silicon nitride bodies having high thermal conductivity of not less than 63 W/m.k (0.15 cal/cm·sec.°C) can be obtained. For this purpose, it is necessary to make grains of $Si_3N_4$ larger. This can be accomplished, for example, by raising the sintering temperature and prolonging the sintering time in the case of the sintering process.

Since the $A\ell$ component in the silicon nitride body such as the silicon nitride sintered body is solid solved into grains of $Si_3N_4$ to produce sialon having low thermal conductivity, the thermal conductivity of the silicon nitride body is deteriorated. For this reason, the content of $A\ell$ in the silicon nitride body is not more than 0.3 wt% when calculated as $A\ell_2O_3$, because reduction in the thermal conductivity can be prevented in this case. Further, it is preferable to use a raw material of silicon nitride containing not more than 0.3 wt% of $A\ell$ in the producing process when calculated as $A\ell_2O_3$. Furthermore, it is preferable to grind the raw material with grinding media made of silicon nitride.

As to $Si_3N_4$ there are two kinds of an $\alpha$ type and a $\beta$ type, and the heat conductivity of the $\alpha$ type is smaller than that of the $\beta$ type. Therefore, the higher the $\beta$ conversion rate, the higher the heat conductivity. For this reason, the $Si_3N_4$ is $\beta$-$Si_3N_4$.

These and other objects, features and advantages of the invention will be appreciated upon reading of the following description of the invention.

In the following, actual examples of the present invention will be explained.

Experiment 1:

A sintering aid containing not more than 0.01 wt% of impurity $A\ell$ was added and mixed into a raw material of silicon nitride containing not more than 0.01 wt% of impurity $A\ell$ at ratios given in Table 1. The sintering aid was selected from raw materials of $Y_2O_3$, $Yb_2O_3$, SiC, MgO and $ZrO_2$. The mixture was ground with a vibration mill by using grinding media made of silicon nitride porcelain and a nylon resin vessel having an inner volume of 1.2 m$\ell$. To 200 g of the raw material mixture were added 1.8 kg of the grinding media and 300 m$\ell$ of water, and the above grinding was effected at a vibration frequency of 1,200/minutes for 3 hours. Then, water was evaporated, and the mixture was granulated to a grain diameter of 150 $\mu$m in the form of a powder to be shaped. Next, the powder was isostatically pressed under a pressure of 7 metric tons/cm² to form a shaped body of 50 × 40 × 6 mm. The shaped body was fired in a nitrogen atmosphere under conditions of temperature, time and pressure shown in Table 1. Thereby, sintered bodies in Example Nos. 1-11 and Comparative Example Nos. 12-14 were obtained.

With respect to the thus obtained sintered bodies, the number of grain boundaries per a length of 10 μm along a straight line drawn in an arbitrary section, thermal conductivity, β conversion rate, four point bending strength and thermal shock resistance were measured. Results are also shown in Table 1.

The number of the grain boundaries was measured as follows:

First, a microstructure of an arbitrary section of the silicon nitride body was photographed by a scanning type electron microscope at a magnitude by which grains of $Si_3N_4$ were able to be discerned one by one. Next, a straight line was drawn in the photograph, and the number of the grain boundaries through which the straight line passed was counted. The straight line was drawn over plural photographs continuously connected until the number of the grain boundaries exceeded 1,000, and that total distance L (μm) of the straight line which was required to count 1,000 grain boundaries was determined. Then, the number of the grain boundaries per 10 μm was determined by (1000/L) × 10.

For example, if a straight line having a length of 500 μm is required to count 1,000 grain boundaries, the number of the grain boundaries per 10 μm is 20.

The thermal conductivity was measured by using a heat constant measuring device according to a laser-flash process. The shape of the each of test pieces was 10 mm in diameter and 3 mm in thickness. One surface of the test piece was coated with carbon by sprayer, and a thermocouple was bonded to the opposite side by using a silver paste.

The β conversion rate was measured by X-ray diffraction. Diffraction intensities $\alpha(210)$ and $\alpha(201)$ of a (210) plane and a (201) plane of $\alpha$-$Si_3N_4$, respectively, and diffraction intensities $\beta(101)$ and $\beta(210)$ of a (101) plane and a (210) plane of $\beta$-$Si_3N_4$, respectively, were measured, and the β conversion rate was determined by the following equation.

$$\beta \text{ conversion rate} = [\beta(101) + \beta(210)]/[\alpha(210) + \alpha(201) + \beta(101) + \beta(210)] \times 100$$

The four point bending strength was measured according to a "process for testing bending strengths of fine ceramics" prescribed in JIS R-1601. The thermal shock resistance was measured by an underwater quenching method in which a temperature difference that did not substantially provoke reduction in strength at room temperature after

quenching was measured.

Table 1

| Run No. | | Sintering aid (wt%) | Firing conditions | | | Thermal conductivity (cal/cm.sec.°C)* | Number of grain boundaries per 10 μm | Content of Aℓ in sintered body when calculated as Aℓ2O3 (wt%) | β conversion rate (%) | Strength at room temperature (MPa) | Thermal shock resistance ΔT°C |
|---|---|---|---|---|---|---|---|---|---|---|---|
| | | | temperature (°C) | time (hr) | pressure (atm)† | | | | | | |
| Example | 1 | Y2O3:Yb2O3=2.2:9.4 | 1900 | 3 | 10 | 0.17 | 12 | <0.1 | 100 | 700 | 1250 |
| | 2 | Y2O3:Yb2O3=2.2:9.4 | 1900 | 4 | 10 | 0.19 | 9 | <0.1 | 100 | 680 | 1250 |
| | 3 | Y2O3:Yb2O3=2.2:9.4 | 1900 | 10 | 10 | 0.20 | 7 | <0.1 | 100 | 650 | 1250 |
| | 4 | Y2O3:Yb2O3=2.2:9.4 | 1800 | 4 | 10 | 0.16 | 13 | <0.1 | 100 | 600 | 1250 |
| | 5 | Y2O3:Yb2O3=2.2:9.4 | 1800 | 8 | 10 | 0.18 | 10 | <0.1 | 100 | 590 | 1250 |
| | 6 | Y2O3:Yb2O3=2.2:9.4 | 2000 | 3 | 100 | 0.19 | 9 | <0.1 | 100 | 680 | 1250 |
| | 7 | Y2O3:Yb2O3:SiC=3.4:14:1 | 1900 | 3 | 10 | 0.20 | 8 | <0.1 | 100 | 700 | 1300 |
| | 8 | Y2O3:Yb2O3:SiC=3.4:14:1 | 1900 | 8 | 10 | 0.23 | 7 | <0.1 | 100 | 650 | 1300 |
| | 9 | Y2O3:MgO:ZrO2=5:3:0.3 | 1800 | 3 | 5 | 0.16 | 15 | <0.1 | 100 | 880 | 1200 |
| | 10 | Y2O3:MgO:ZrO2=5:3:0.3 | 1800 | 5 | 5 | 0.17 | 13 | <0.1 | 100 | 880 | 1200 |
| | 11 | Y2O3:MgO:ZrO2=5:3:0.3 | 1700 | 3 | 1 | 0.15 | 20 | <0.1 | 100 | 870 | 1200 |
| Comparative Example | 12 | Y2O3:Yb2O3=2.2:9.4 | 1800 | 1 | 10 | 0.12 | 27 | <0.1 | 100 | 600 | 1000 |
| | 13 | Y2O3:MgO:ZrO2=5:3:0.3 | 1700 | 0.5 | 1 | 0.09 | 30 | <0.1 | 100 | 830 | 1000 |
| | 14 | Y2O3:MgO:ZrO2=5:3:0.3 | 1630 | 3 | 1 | 0.07 | 42 | <0.1 | 90 | 780 | 950 |

† 1 atm = $1.01 \times 10^5$ Pa

* 1 cal/cm.s.°C = 420 W/m.K

From results in Table 1, it is seen that Example Nos. 1-11 in which the number of the grain boundaries per 10 μm was not more than 20 had better thermal shock resistance as compared with Comparative Example Nos. 12-14.

4

Further, when Example Nos. 1-3 are compared, it is seen that the number of the grain boundaries per 10 μm is decreased by prolonging the firing time even at the same firing temperature, so that high thermal conductivity is attained. Further, when Example Nos. 2 and 4 are compared, it is seen that the number of the grain boundaries is decreased by raising the firing temperature even for the same firing time, so that high thermal conductivity is attained. To the contrary, the number of the grain boundaries per 10 μm is greater and the thermal conductivity is low in the case of Comparative Example No. 13 having a shorter firing time and Comparative Example No. 14 having a lower firing temperature.

Experiment 2:

In order to examine influences of the content of Aℓ in silicon nitride sintered bodies, raw materials of $Y_2O_3$ and $Yb_2O_3$ containing not more than 0.01 wt% of impurity Aℓ were added to each of five kinds of powdery raw materials of silicon nitride in which Aℓ was contained in an amount of 0.01 wt%, 0.05 wt%, 0.07 wt%, 0.12 wt%, or 0.15 wt%. Then, a shaped body was formed from the thus obtained mixture, and fired at 1,900°C in a nitrogen atmosphere for 3 hours in the same manner as in Experiment 1, thereby obtaining sintered bodies in Example Nos. 21-25 shown in Table 2.

With respect to the sintered bodies obtained above, the thermal conductivity, the number of grain boundaries per 10 μm, the β conversion rate and the content of Aℓ in the sintered body were measured in the same manner as in Experiment 1. Results are shown in Table 2.

Table 2

| Run No. | | Content of Aℓ in raw material of silicon nitride (Wt%) | Thermal conductivity (cal/cm·sec.°C)* | Number of grain boundaries per 10 μm | β conversion rate (%) | Content of Aℓ in sintered body when calculated as $Aℓ_2O_3$ (wt%) |
|---|---|---|---|---|---|---|
| Example | 21 | 0.01 | 0.17 | 12 | 100 | <0.1 |
| | 22 | 0.05 | 0.17 | 12 | 100 | 0.1 |
| | 23 | 0.07 | 0.16 | 15 | 100 | 0.2 |
| | 24 | 0.12 | 0.15 | 15 | 100 | 0.3 |
| | 25 | 0.15 | 0.15 | 20 | 100 | 0.3 |

\* 1 cal/cm.s.°C = 420 W/m.K

From the results in Table 2, it is seen that among the sintered bodies satisfying the number of the grain boundaries in the the present invention, the greater the content of Aℓ, the lower the thermal conductivity, and when the content of Aℓ is not more than 0.3 wt% as calculated in the form of $Aℓ_2O_3$, high thermal conductivity can be attained.

Experiment 3:

In order to examine influences of grinding media used, a raw material of silicon nitride containing not more than 0.01 wt% of Aℓ as an impurity was formulated at the same compounding recipe with use of the same additives as in Example 2. Example Nos. 26-30 shown in Table 3 were obtained from the thus obtained mixture in the same manner as in Experiment 1 with use of $Si_3N_4$ grinding media containing MgO as additive, $Si_3N_4$ grinding media containing MgO and $Aℓ_2O_3$ as additive, $Si_3N_4$ grinding media containing $Y_2O_3$ and $Aℓ_2O_3$ as additive, or $Aℓ_2O_3$ grinding media, respectively.

With respect to the sintered bodies obtained above, the thermal conductivity, the number of grain boundaries per 10 μm, the β conversion rate and the content of Aℓ in the sintered body were measured in the same manner as in Experiment 1. Results are shown in Table 3.

Table 3

| Run No. | | Kind of grinding media | Grinding time (hour) | Thermal conductivity (cal/cm·sec.°C)* | Number of grain bounda-ries per 10 $\mu$m | $\beta$ conversion rate (%) | Content of A$\ell$ in sintered body when calculated as A$\ell_2$O$_3$ (wt%) |
|---|---|---|---|---|---|---|---|
| Example | 26 | MgO base Si$_3$N$_4$ | 3 | 0.19 | 9 | 100 | <0.1 |
| | 27 | MgO-A$\ell_2$O$_3$ base Si$_3$N$_4$ | 3 | 0.18 | 9 | 100 | 0.1 |
| | 28 | Y$_2$O$_3$-A$\ell_2$O$_3$ base Si$_3$N$_4$ | 3 | 0.18 | 9 | 100 | 0.1 |
| | 29 | A$\ell_2$O$_3$ | 1 | 0.16 | 15 | 100 | 0.2 |
| | 30 | A$\ell_2$O$_3$ | 3 | 0.15 | 15 | 100 | 0.3 |

* 1 cal/cm.s.°C = 420 W/m.K

From the results in Table 3, it is seen that since Example Nos. 26-28 using the Si$_3$N$_4$ grinding media had the small mixing amount of A$\ell$ from the grinding media during the grinding, the thermal conductivity was not substantially lowered. On the other hand, it is seen that since Example Nos. 29 and 30 using the A$\ell_2$O$_3$ grinding media had the great mixing amount of A$\ell$, the thermal conductivity is lowered.

The present invention is not limited to the above mentioned examples only, for example, although the above-mentioned examples are directed to the silicon nitride sintered bodies, thermal conductivity of vapor deposited films of silicon nitride formed by CVD or the like as well as flame sprayed films of silicon nitride can be increased as long as the requirements of the present invention are satisfied.

As is clear from the foregoing explanation, according to the present invention, when the number of the grain boundaries of Si$_3$N$_4$ in the silicon nitride body per 10 $\mu$m is not more than 20 when measured along a straight line drawn in an arbitrary section, and preferably when the content of A$\ell$ is also not more than 0.3 wt% as calculated in the form A$\ell_2$O$_3$, the silicon nitride body having high thermal conductivity of, for example, not less than 63 W/m.K (0.15 cal/cm·sec.°C) can be obtained. Thus, the silicon nitride bodies according to the present invention can favorably be used as high temperature structural bodies.

**Claims**

1. A sintered polycrystalline $\beta$-type silicon nitride body, wherein (i) the number of grain boundaries of Si$_3$N$_4$ per length of 10$\mu$m is not more than 20 when measured along a straight line drawn in an arbitrary section of the silicon nitride body, (ii) the content of Al in the silicon nitride body is not more than 0.3 wt% when calculated as Al$_2$O$_3$, and (iii) the thermal conductivity of the sintered silicon nitride body is not less than 63 W/m.K (0.15 cal/cm/sec.°C).

**Patentansprüche**

1. Polykristalliner $\beta$- Typ Siliziumnitrid-Sinterkörper, worin (i) die Anzahl der Korngrenzen von Si$_3$N$_4$ auf einer Länge von 10 $\mu$m nicht mehr als 20 beträgt, wenn entlang einer in einem willkürlichen Schnitt des Siliziumnitridkörpers gezogenen geraden Linie gemessen wird, (ii) der Al-Gehalt im Siliziumnitridkörper, berechnet als Al$_2$O$_3$, nicht mehr als 0,3 Gew.-% beträgt, und (iii) die Wärmeleitfähigkeit des Siliziumnitrid-Sinterkörpers nicht weniger als 63 W/m·K (0,15 kal/cm/s·°C) beträgt.

**Revendications**

1. Corps en nitrure de silicium du type $\beta$ polycristallin fritté, où (i) le nombre de joints de grains de Si$_3$N$_4$ par longueur de 10 $\mu$m n'est pas supérieur à 20 lorsque mesuré le long d'une ligne droite tirée dans une section arbitraire du corps en nitrure de silicium, (ii) la teneur en Al dans le corps en nitrure de silicium n'est pas supérieure à 0,3% lorsque calculée sous la forme de Al$_2$O$_3$, et (iii) la conductivité thermique du corps en nitrure de silicium fritté n'est pas inférieure à 63 W/m.K. (0,15 cal/cm/s.°C).